# EUROPEAN PATENT SPECIFICATION

(11) **EP 4 644 118 B1**
(45) Date of publication and mention of the grant of the patent: **14.10.2026**
(21) Application number: 24173288.2
(22) Date of filing: 30.04.2024
(51) Int. Cl.: B32B 27/08, B32B 27/18, B32B 27/32, B29B 17/00

(54) **A METHOD TO PROVIDE A BIRD- AND/OR RODENT REPELLENT POLYMER FILM**
VERFAHREN ZUR BEREITSTELLUNG EINES VOGEL- UND/ODER NAGETIERABWEISENDEN POLYMERFILMS
PROCÉDÉ POUR FOURNIR UN FILM POLYMÈRE RÉPULSIF POUR OISEAUX ET/OU RONGEURS

(43) Date of publication of application: 05.11.2025
(73) Proprietor: European Plast Research & Development SA, 1273 Luxembourg (LU)
(72) Inventor: Omet, Philippe Louis André Célestin, 1273 Luxembourg (LU)
(74) Representative: Ipsilon Belgium

(56) References cited:
- WO-A2-2014/074992
- JP-A- H06 304 989
- US-A1- 2020 353 724
- US-A1- 2023 042 121

## Description

### Field of the Invention

The present invention generally relates to methods to provide a bird- and/or rodent repellent polymer film, and bird- and/or rodent repellent polymer films.

### Background of the Invention

Bird- and/or rodent repellent polymer film, and bird- and/or rodent repellent polymer films are known from e.g. as Agrirepel Wrap from www.agrirepel.com. Ecofriendly bird- and rodent repellent components are added to the polymer material of which the film or wrap is provided. However such bird- and rodent repellent components are natural oils, essential oils and alike, and are extremely expensive. There is a need for using this bird- and rodent repellent components more efficiently, while keeping the effective bird- and rodent repellent effects, even improving these effects.

WO2014074992 discloses an air cushioned film encapsulating or otherwise containing active ingredients or bioactive substances or components thereof specifically for the purpose of a release by penetration either used singularly, as an insert, and or in combination with polymeric films incorporated, coated, laminated, infused, coextruded or somehow containing active ingredients to provide several possible desired effects, amongst others providing rodent repellence. US2023042121 and JP406304989 disclose methods to produce polymeric films. US2020353724 discloses an insecticidal food storage bag, being a multilayered bag, one of the layers being an insecticidal layer.

### Summary of the Invention

According to a first aspect of the invention, a method to provide a bird- and/or rodent repellent polymer film is provided, the method comprises the steps of
- providing a multilayered intermediate polymer film, comprising
   ∘ a first outer polymer layer from a first polymer material comprising at least one bird- and/or rodent repellent component;
   ∘ a second outer layer from a second polymer material and being free of bird- and/or rodent repellent components;
   ∘ one or more intermediate layer from at least a first further polymer material;
- converting the intermediate polymer film to one or more final polymer films thereby provided polymer film waste material;
- reusing the polymer film waste material as additive to one or more of the at least one further polymer materials.

The method has the advantage that as good as all of the expensive bird- and/or rodent repellent component present in the waste may be recycled in inner layer or layers and hence may fulfil its repellent function. As the amount of waste produced is process inherent and thus is about constant over time, the amount of bird- and/or rodent repellent component recycled in the inner layer or layers may be kept relatively constant over the surface and time, in particularly when the process is a continuous process.

As the first outer layer may be thin and a variation of the thickness of this first outer layer may have a significant impact on the repellence performance locally, imperfections and deficit in the amount of bird- and/or rodent repellent component in first outer layer may be met by the underlaying layer or layers in which the bird- and/or rodent repellent component is recycled.

In any case, by applying this method according to the first aspect of the invention, the volume of the bird- and/or rodent repellent component is used in its entirety and does not get lost in waste stream ending up in products in which the component has no function.

The bird- and/or rodent repellent component preferably are natural bird- and/or rodent repellent components, like essential oils, herb oils like cinnamon oil, sage oil, thyme oil, rosemary oil, neem oil, Greek catmint oil, garlic oil, clove oil, mint oils like peppermint oil, bergamot mint oil and spearmint oil, oils from plants such as soybean oil, eucalyptus oil, lemon eucalyptus oil, tea tree oil, geraniol, lavender or lavender oil, pine oil, cedar wood oil, balsam fir oil; oil from plants from the grass family, like oil from lemongrass, barbed wire grass, silky heads, oily heads, cochin grass, malabar grass, citronella grass and fever grass, hence such as citronella, citrus fruit oils like lemon oil, citrus oil, orange oil, lime oil, and any combination of some or all of these.

Also non oily natural bird- and/or rodent repellent components may be used, such as cayenne pepper, garlic or chili Pepper, or non-natural components like ammonium hydroxide, white vinegar and apple cider vinegar, and any combination of some or all of these.

More preferred, the bird- and/or rodent repellent component comprises a combination of lavender oil, peppermint oil and citronella.

According to some embodiments, the step of providing a multilayered intermediate polymer film may use a continuous film producing process.

According to some embodiments, the step of providing a multilayered intermediate polymer film may use a film casting process.

According to some embodiments, the step of providing a multilayered intermediate polymer film may use a polymer extrusion process.

According to some embodiments, the step of providing a multilayered intermediate polymer film may use a film blowing process.

According to some embodiments, one or more intermediate layer may comprise a first and at least a second and optionally further intermediate layers, the first intermediate layer is provided from said first further polymer material, and wherein said second and optionally further intermediate layer are provided from polymer material free of bird- and/or rodent repellent components.

The bird- and/or rodent repellent polymer films may comprise 3, 4, 5, 6, 7, 8 or even more polymer layers. Optimally also additional reinforcement layers may be added, like textile woven layers, felts, fleeces, scrims and alike. The fibers used for such reinforcement layers may be e.g. glass fibers or high tenacity polymer fibers or alike.

The thickness of the various outer an intermediate layers may differ or may all be identical. Preferably the outer layers, the first and/or the second outer layer, is a relatively thin layer. Each of these outer layers may provide 5 to 15% of the total thickness of the polymer film. The first outer layer is preferably such thin layer, providing only 5 to 15% of the total thickness. The bird- and/or rodent repellent component present in this relatively thin layer is under normal conditions sufficient to provide the bird- and/or rodent repellency over the time period aimed for, e.g. one or two years during exposure to the elements. A thicker first outer layer was found to provide no significant additional effect. However as the thin layer may not always be free of defects, in partiality the thinner this layer is provided, the addition of a minor amount of the bird- and/or rodent repellent component in one of the layers under this first outer layer, and preferably in the intermediate layer immediately adjacent this first outer layer, was surprisingly found to be advantageous in order to guarantee a proper functioning of the bird- and/or rodent repellent film according the invention.

For intermediate layers, preferably at least two intermediate layers are used, and more preferably 3 or more. The intermediate layers may be thicker, and each may provide 20 to 40% or even to 50% of the total thickness of the polymer film. Most preferred however is the use of an odd number of intermediate layers, and using alternating a thicker and a thinner layer. As an example, three intermediate layers are used, the layers directly contacting each of the two outer layers being thicker layers, e.g. each providing 15% to 40% of the total thickness, the middle layer be a relatively thin layer and providing between 5 and 15% of the total thickness. As a mere example each of the outer layers provide 5 to 15% of the total thickness, whereas two intermediate layers, provided immediately adjacent one of the pouter layer, each provide 20 to 40% of the total thickness, and the middle layer providing also between 5 and 15% of the total thickness of the polymer film.

According to some embodiments, the first intermediate layer may be the intermediate layer contacting the inner side of the first outer layer.

According to some embodiments, the intermediate layer contacting the inner side of the first outer layer may provide 15 to 50% of the thickness of the polymer film, more preferably 18 to 40% of the thickness of the polymer film.

According to some embodiments, the first outer layer may provide 5 to 15% of the thickness of the polymer film.

According to some embodiments, each of the first outer layer, second outer layer and each of the intermediate layers may be provided by a dedicated polymer extruder.

The polymeric materials for each of the layers may be identical or different. Preferred polymer material is polyester (PES), polyethylene (PE) such as high density polyethylene (HDPE) of low density polyethylene (LDPE), polypropylene (PP) or polyamide (PA). most preferably PE, like HDPE and/or LDPE is used for each of the layers. The PE used may be virgin PE, like virgin LDPE or recycled PE.

According to some embodiments of the present invention, the polymer film waste material may first be remelted and converted to polymer grains, which polymer grains are thereafter combined with the polymer grains being fed to the extruder or extruders providing the polymer for the one or more intermediate layers in which the bird- and/or rodent repellent component is introduced.

As such, the polymer grains with the bird- and/or rodent repellent component become a masterbatch which can be mixed with other masterbatches or the bulk grains provided to the extruder.

As to the step of providing a multilayered intermediate polymer film, this film is preferably provided by a film blowing process, also known as blown film extrusion. A balloon is blown, the layers are blown one inside the other and adhere one to the other during the blowing action. The tubular product may be slit such a flat film is obtained. The tube may be slit on one wide intermediate film, or may be slit in two intermediate films of half width. From this one or two intermediate films, several separate films with a given width may be slit and rolled into coiled films. In order to keep the final width of the coiled films constant, the sides of the one or two intermediate films, and/or the sides of the final films being slit from these intermediate films, may be trimmed, providing a plurality of waste tapes of polymer film. These waste tapes of polymer film may provide the polymer film waste material.

According to some embodiments, the amount of bird- and/or rodent repellent component in the first outer layer may range from 1 to 10%w.

More preferably the amount of bird- and/or rodent repellent component in the first outer layer ranges from 1.5 to 8%w, e.g. from 2 to 6%w, e.g. from 2 to 4%w, e.g. 2.5%w, 3%w or 3.5%w.

According to some embodiments, the polymer film waste material obtained may be in the range of 2%w to 15%w of the intermediate polymer film.

Preferably the polymer film waste material obtained may be in the range of 4%w to 12%w of the intermediate polymer film, e.g. in the range of 5%w to 10%w of the intermediate polymer film, e.g. about 8%w.

According to a second aspect of the invent, a bird- and/or rodent repellent polymer film is provided.

According to some embodiments, a bird- and/or rodent repellent polymer film comprising a first outer polymer layer from a first polymer material comprising at least one bird- and/or rodent repellent component, a second outer layer from a second polymer material and being free of bird- and/or rodent repellent components and one or more intermediate layer from at least a first further polymer material, at least one of these intermediate layers comprising said at least one bird- and/or rodent repellent component, the %w of the bird- and/or rodent repellent component in the first outer layer being higher than the %w of the bird- and/or rodent repellent component in this at least one intermediate layer.

According to some embodiments, the amount of bird- and/or rodent repellent component in the first outer layer may range from 1 to 10%w.

Preferably only the intermediate layer immediately adjacent this first outer layer may comprise the bird- and/or rodent repellent component, the other intermediate layers, if any, being free of bird- and/or rodent repellent components.

According to some embodiments, only the intermediate layer immediately adjacent said first outer layer may comprise said bird- and/or rodent repellent component in an amount in the range of 0.01%w to 0.1%w. Optionally, the other intermediate layers, if any, are free of bird- and/or rodent repellent components.

According to a third independent aspect of the invention, a bird- and/or rodent repellent polymer film comprising a plurality of polymer layers, at least one bird- and/or rodent repellent component being present at one, i.e. the first of its outer surfaces, the other, i.e. the second outer surface being free of bird- and/or rodent repellent component is provided. The film according to the third aspect of the invention comprises a first outer polymer layer from a first polymer material comprising at least one bird- and/or rodent repellent component, a second outer layer from a second polymer material and being free of bird- and/or rodent repellent components and one or more intermediate layer from at least a first further polymer material, at least one of these intermediate layers comprising said at least one bird- and/or rodent repellent component, the %w of the bird- and/or rodent repellent component in the first outer layer being higher than the %w of the bird- and/or rodent repellent component in this at least one intermediate layer. Such bird- and/or rodent repellent polymer film may be provided by multilayer casting or film blowing, where at least in the raw material used to provide one of the outer surfaces, at least one bird- and/or rodent repellent component is used, while in the raw material used to provide the other outer surface, the raw materials used are free of bird- and/or rodent repellent components. Optionally one or more bird- and/or rodent repellent components may be added in one or more of the intermediate layers of the plurality of polymer layers. Most preferably one or more bird- and/or rodent repellent components is provided in the intermediate layer contacting the outer layer comprising one or more bird- and/or rodent repellent components. This bird- and/or rodent repellent polymer film according to the third aspect of the invention may be provided using the method to provide a bird- and/or rodent repellent polymer film according to the first aspect of the invention.

For the bird- and/or rodent repellent polymer film according to this third aspect of the present invention, bird- and/or rodent repellent component is released faster - and therefore more efficiently - when the film is stretched over 70%, preferably in the range of 70% to 90% before actually applying the film to the product to be protected. Such stretching is referred to as pre-stretching of the film. Pre-stretching for z% means that after stretching, the originally unstretched length has increased with z%. As an example, pre-stretching for 70% means that the originally unstretched length of 1 meter, became 1.7 meter after stretching.

According to some embodiments, the amount of bird- and/or rodent repellent component in the first outer layer of the bird- and/or rodent repellent polymer film according to this third aspect of the present invention may range from 1 to 10%w. More preferably the amount of bird- and/or rodent repellent component in the first outer layer ranges from 1.5 to 8%w, e.g. from 2 to 6%w, e.g. from 2 to 4%w, e.g. 2.5%w, 3%w or 3.5%w.

The mechanical properties of the bird- and/or rodent repellent polymer film according to the third aspect of the invention, such as the elongation and resistance to traction should allow it to be stretched in the range of 55% to 90%, and preferably in the range of 70% to 90% with temperature from 15 degrees to 35 degrees.

According to some embodiments, the bird- and/or rodent repellent polymer film may have a necking down in less than 25% when stretched at 70%, or even when stretched at 90%. A necking down of 25% means that the width of the film perpendicular to the stretching direction and parallel in the plane of the film, is reduced with 25% in view of the original width. Hence as an example, a width of 750mm is reduced by 188mm to a width of 562mm by stretching the film by 70% or by 90%, as the case may be. Most preferably the necking down of is in the range of 15% to 25%, such as in the range of 17% to 23%. As an example, the bird- and/or rodent repellent polymer film of a 750 mm width is preferably after stretching to 70%, or even to 90%, in the range of 580 mm to 620 mm wide.

By providing a plurality of layers, the first outer layer, and optionally an intermediate layer immediately adjacent and contacting this first outer layer, being charged with bird- and/or rodent repellent component, may provide the required repellency, while the other outer layer and/or others of the other intermediate layers, may provide or contribute in the provision of the mechanical properties of the bird- and/or rodent repellent polymer film according to the third aspect of the invention. As such a bird- and/or rodent repellent polymer film may be provided which on the one hand shows more efficient release of the bird- and/or rodent repellent component due to a higher pre-stretching, the latter being obtainable by providing further intermediate and/or a second outer layer, whose properties are tuned to obtain the proper mechanical properties of the bird- and/or rodent repellent polymer film in its entirety.

More preferred this film to a third independent aspect of the invention comprises a multilayered structure and is provided preferably in LDPE, like virgin LDPE.

Most preferably, the film according to this third aspect of the invention may be a film according to the second aspect of the invention as well.

The features of the second aspect of the invention, or the features of the first aspect of the invention, may be combined with these of the third aspect of the invention.

According to a fourth aspect of the invention the bird- and/or rodent repellent polymer film according to the second aspect of the invention is provided using a method according to the first aspect of the invention.

According to a fifth aspect of the invention, the bird- and/or rodent repellent polymer film according to the second and/or third aspect of the invention or the bird- and/or rodent repellent polymer film obtained with a method according to the first aspect of the invention is used as protective film for protecting edible substances, such as animal food against birds or rodents.

The bird- and/or rodent repellent polymer film may be used as wrapping foil or film, for wrapping pallets or bales, e.g. for wrapping bales of animal food, like hay, grains, haylage, whole crop or other food for dairy cattle, goats, sheep and equines, such as horses. The bird- and/or rodent repellent polymer film may be used as wrapping foil or film for wrapping pallets on which packaged food or substances are stacked, like packaged eggs, tomatoes, apples, pears, fruits, and alike. The bird- and/or rodent repellent polymer film may be used as wrapping foil or film for wrapping pallets, for which the film is non-direct in contact with substances like packaged eggs, tomatoes, apples, pears, fruits, and alike.

The bird- and/or rodent repellent polymer film may be used for continuous wrapping of animal food, like hay or other food for dairy cattle, goats, sheep and equines, such as horses.

The bird- and/or rodent repellent polymer film may be used for covering stacks of edible substances, such as animal food to protect against birds or rodents. As an example, the bird- and/or rodent repellent polymer film may be used as silages or as silage film, e.g. for storing or covering substances, like animal food, like hay, grains, haylage or whole crop or other food for dairy cattle, goats, sheep and equines, such as horses.

The bird- and/or rodent repellent polymer film may be used for packaging substances or products, like bags of grains, animal food, as well as industrially used edible goods like malt.

The bird- and/or rodent repellent polymer film may be used for providing bags of storing substances, like animal food, like hay, grains, haylage or whole crop or other food for dairy cattle, goats, sheep and equines, such as horses.

As an example, this polymer film may be used as bale wrap for wrapping animal food. This polymer film may be used as wrap for wrapping animal food. This polymer film may e.g. be used as wrap for wrapping containers, sacks, bags or packages and alike of grains or animal food. Hence according to some embodiments, the bird- and/or rodent repellent polymer film according to the third or second aspect of the invention, or the bird- and/or rodent repellent polymer film obtained by a method according to the first aspect of the invention, is used as wrapping film for providing wrapped silos or bales of animal food. During this use, the wrapping may be performed after stretching the film to a degree of more than 70%. Preferably, during its use, the wrapping may be performed after stretching the film to a degree of more than 75%, such as in the range of 70 to 95%, preferably in the range of 70 to 90%.

Thus the bird- and/or rodent repellent polymer film according to the second, third, fourth and/or fifth aspect of the invention, or a bird- and/or rodent repellent polymer film obtained by a method according to the first aspect of the invention is used for wrapping or covering animal food. According to some embodiments, the wrapping may be performed after stretching the film to a degree of more than 70%, such as in the range of 70 to 95%, preferably in the range of 70 to 90%.

Hence the bird- and/or rodent repellent polymer film according to the second or the third aspect of the invention, or a bird- and/or rodent repellent polymer film obtained by a method according to the first aspect of the invention, may be used for wrapping or covering animal food.

It is clear that the features of one aspect of the invention may be combined with the features of any other aspect of the invention. Except when explicitly mentioned differently, any range referred to in the context of this invention is to be understood inclusive.

### Brief Description of the Drawings

Fig. 1 illustrates schematically a process for producing a bird- and/or rodent repellent polymer film according to the invention.
Fig. 2 illustrates schematically a cross section of a bird- and/or rodent repellent polymer film according to the invention.

In the different figures, the same reference signs refer to the same or a similar feature.

### Detailed Description of Embodiment(s)

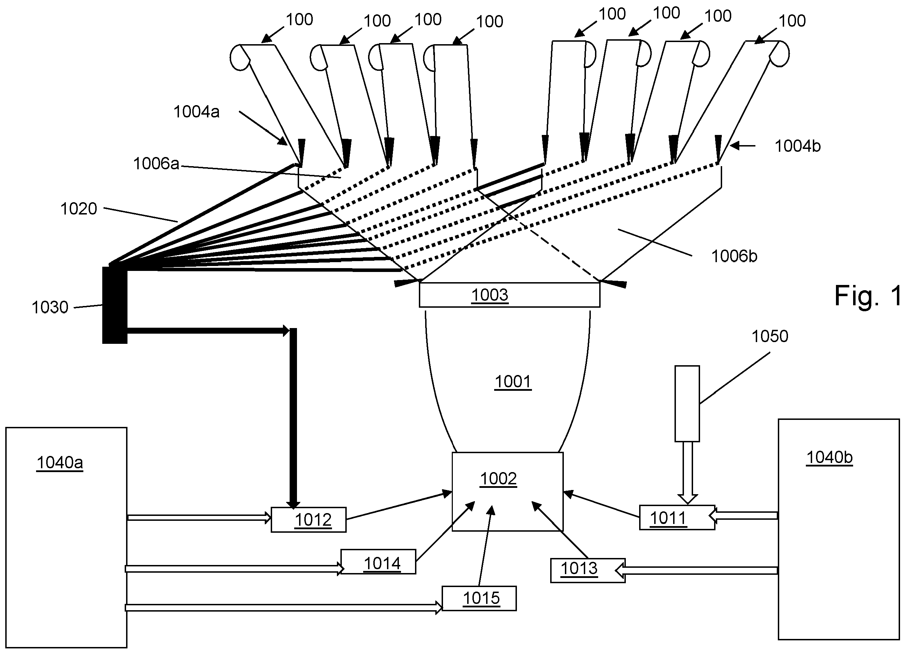

A method to provide a bird- and/or rodent repellent polymer 100 film is shown in figure 1. An intermediate film 1001 is provided by a film blowing apparatus 1002. The intermediate film is provided as a five layer film, by providing five layer, each being made using molten polymeric material from five extruders 1011, 1012, 1013, 1014 and 1015, wherein extruder 1011 provides the outer film layer, extruder 1012 provides the second film layer, i.e. the layer adjacent to and in contact with the outer film layer, extruder 1013 provides the third film layer, i.e. the layer adjacent to and in contact with the second film layer, extruder 1014 provides the fourth film layer, i.e. the layer adjacent to and in contact with the third film layer and extruder 1015 provides the fifth film layer, i.e. the layer adjacent to and in contact with the fourth film layer, and being the inner layer of the blown intermediate film 1001.

Hence the blown intermediate film 1001 has the shape of a tube. This tube is cut in two halves 1006a and 1006b at the cutting station 1003. As such two sheets of film are provided, each having the first 1011 and the fifth 1015 layer as outer layers. As such there is the first outer layer 1011 and the second outer layer 1015, and three intermediate layers.

At a second cutting station 1004a and 1004b, one of the halves 1006a respectively 1006b, is slit in four polymer films, each polymer film having a width which is useful to use the polymer film for the intended purpose. A small tape of film is cut in between each pair of adjacent films 100. The edges of the halves are also cut to set the edge of the film straight. As such eight bird- and/or rodent repellent polymer 100 film are made and coiled, while 10 small waste strips 1020 of polymer film may be obtained.

The skilled person understands that other ways to cut and slit the intermediate film into useful polymer films can be used. The tubular blown intermediate film 1001 can be opened in one intermediate film having the width equal to the circumference of the tube. The intermediate film, or the two intermediate halves of the film, can be slit in more than 4 individual films, or only into 2 or 3 individual films. Or in an alternative, the width of the intermediate film, or the two intermediate halves of the film, may just be adjusted to the intended with.

In a waste recuperation station 1030, the waste strips 1020 are gathered, molten and converted into small polymer grains. As the waste strips are in fact of the same material as the bird- and/or rodent repellent polymer 100 film, these strips, and hence the grains, comprise not only the polymeric material from the five layers, but also the bird- and/or rodent repellent component, being present in some of the layers.

Turning to the raw polymer material being used to provide the five layers, preferably PE grains are stored in one or more silos 1040. From these silo's, the five extruders 1011, 1012, 1013, 1014 and 1015 are fed. To the first extruder 1011, providing he first outer layer of the final bird- and/or rodent repellent polymer 100 film, the bird- and/or rodent repellent component is added from a storage 1050. This bird- and/or rodent repellent component is preferably composed of natural oils, comprising or even consisting of lavender oil, peppermint oil and citronella, e.g. Combirepel^{™} from C Tech corporation, India, such as Combirepel^{™} 8181. The weight of the bird- and/or rodent repellent component on the total material extruded for this first outer layer, is about 3%w.

The amount of waste material is about 8%w of the total weight of the blown intermediate film 1001. For each weight unit of blown intermediate film 1001, 8% of this weight is obtained from waste. This waste is converted into grains and reused as feed for the second extruder 1012 only. As such, the weight of the bird- and/or rodent repellent component in this 8% waste, is integrated in the second layer of the blown intermediate film 1001. Taking into account the thicknesses of the different layers, the concentration of bird- and/or rodent repellent component in the second layer of the final bird- and/or rodent repellent polymer 100 film is about 0.07 to 0.08%w.

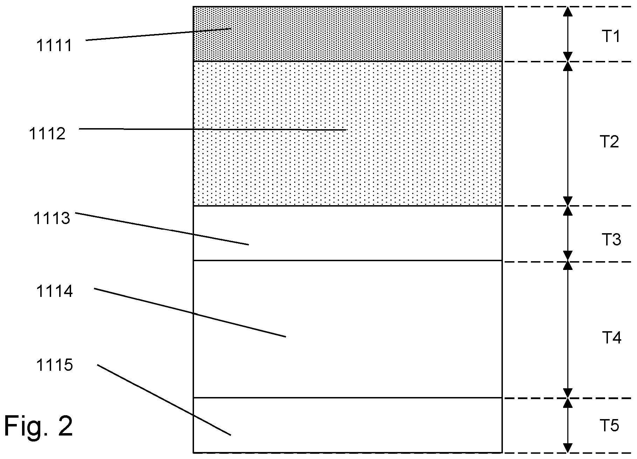

A cross section of the resulting final bird- and/or rodent repellent polymer film 100 is schematically shown in figure 2. The five layers 1111, 1112, 1113, 1114 and 1115 are shown with their respective thicknesses T1, T2, T3, T4 and T5. The thicknesses T1, T3 and T5 are about equal and each about 2.5µm. The thicknesses T2 and are each about 8.75µm. As such the thickness of the final bird- and/or rodent repellent polymer 100 film is about 25µm. In the first outer layer 1111, about 3%w of bird- and/or rodent repellent components are present, in the second layer 1112, about 0.06 to 0.08%w of the weight is provided by bird- and/or rodent repellent components, all obtained by recuperating the waste of the film production, wherein the waste of 1m² of production is reused in 1m² of bird- and/or rodent repellent polymer 100 film. The three layers 1113, 1114 and 1115 are free of bird- and/or rodent repellent components.

When using this bird- and/or rodent repellent polymer film 100, e.g. to wrap silos or bales of animal food, like hay, grains, haylage or wholecrop, the film 100 is pre-stretched to a degree of more than 70%, preferably to a pre-stretch in the range of 70% to 90%, after which the pre-stretched film is wrapped around the product intended to be baled or wrapped, e.g. to form a silo. This pre-tensioning or pre-stretching is feasible as the product will still not be able to puncture the wrap, while the bird- and/or rodent repellent component is set free or is available at the outer surface in a more efficient way. Obviously it is clear that the outer surface of the film 100 comprising the bird- and/or rodent repellent component is used facing outwards the silo or bale.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method to provide a bird- and/or rodent repellent polymer film (100), comprising the steps of
- providing a multilayered intermediate polymer film (1001), comprising
∘ a first outer polymer layer (1111) from a first polymer material comprising at least one bird- and/or rodent repellent component;
∘ a second outer layer (1115) from a second polymer material and being free of bird- and/or rodent repellent components;
∘ one or more intermediate layers (1112, 1113, 1114) from at least a first further polymer material;
- converting the intermediate polymer film to one or more final polymer films thereby provide polymer film waste material;
- reuse the polymer film waste material (1020) as additive to one or more of the at least one further polymer materials.

2. A method according to claim 1; wherein the step of providing a multilayered intermediate polymer film uses a continuous film producing process.

3. A method according to any one of the preceding claims, wherein the step of providing a multilayered intermediate polymer film uses a film casting process.

4. A method according to any one of the claims 1 to 2, wherein the step of providing a multilayered intermediate polymer film uses a polymer extrusion process.

5. A method according to claim 4, wherein the step of providing a multilayered intermediate polymer film uses a film blowing process.

6. A method according to any one of the claims 4 to 5, wherein one or more intermediate layer comprises a first and at least a second and optionally further intermediate layers, the first intermediate layer is provided from said first further polymer material, and wherein said second and optionally further intermediate layer are provided from polymer material free of bird- and/or rodent repellent components.

7. A method according to claim 6, wherein said first intermediate layer is the intermediate layer contacting the inner side of the first outer layer.

8. A method according to claim 7, wherein the intermediate layer contacting the inner side of the first outer layer provides 15 to 50% of the thickness of the polymer film, more preferably 18 to 40% of the thickness of the polymer film

9. A method according to any one of the claims 7 to 8, wherein the first outer layer provides 5 to 15% of the thickness of the polymer film

10. A method according to any one of the claims 4 to 9, wherein each of the first outer layer, second outer layer and each of the intermediate layers are provided by a dedicated polymer extruder.

11. A method according to any one of the claims 1 to 10, wherein the amount of bird- and/or rodent repellent component in the first outer layer ranges from 1 to 10%w.

12. A method according to any one of the claims 1 to 11, wherein the polymer film waste material obtained is in the range of 2%w to 15%w of the intermediate polymer film.

13. A bird- and/or rodent repellent polymer film (100) comprising a plurality of polymer layers (1111, 1112, 1113, 1114, 1115) , at least one bird- and/or rodent repellent component being present at one outer surface, the other outer surface being free of bird- and/or rodent repellent component, said bird- and/or rodent repellent polymer film comprising a first outer polymer layer (1111) from a first polymer material comprising at least one bird- and/or rodent repellent component, a second outer layer (1115) from a second polymer material and being free of bird- and/or rodent repellent components and one or more intermediate layer from at least a first further polymer material, at least one of these intermediate layers (1112) comprising said at least one bird- and/or rodent repellent component, the %w of the bird- and/or rodent repellent component in the first outer layer being higher than the %w of the bird- and/or rodent repellent component in this at least one intermediate layer.

14. A bird- and/or rodent repellent polymer film according to claim 13, wherein the amount of bird- and/or rodent repellent component in the first outer layer ranges from 1 to 10%w.

15. The use of the bird- and/or rodent repellent polymer film according to any one of the claims 13 to 14 or a bird- and/or rodent repellent polymer film obtained by a method according to any one of the claims 1 to 12, for wrapping or covering animal food.

16. The use of the bird- and/or rodent repellent polymer film according to claim 15, wherein the wrapping is performed after stretching the film to a degree of more than 70%.

## Patentansprüche

1. Verfahren zur Bereitstellung eines vogel- und/oder nagetierabweisenden Polymerfilms (100), umfassend die folgenden Schritte
- Bereitstellen eines mehrschichtigen Zwischenpolymerfilms (1001), umfassend
∘ eine erste Außenpolymerschicht (1111) aus einem ersten Polymermaterial, umfassend zumindest eine vogel- und/oder nagetierabweisende Komponente;
∘ eine zweite Außenschicht (1115) aus einem zweiten Polymermaterial und frei von vogel- und/oder nagetierabweisenden Komponenten;
∘ eine oder mehrere Zwischenschichten (1112, 1113, 1114) aus zumindest einem ersten weiteren Polymermaterial;
- Umwandeln des Zwischenpolymerfilms in einen oder mehrere finale Polymerfilme und dadurch Bereitstellen von Polymerfilmabfallmaterial;
- Wiederverwenden des Polymerfilmabfallmaterials (1020) als Additiv zu einem oder mehreren der zumindest einen weiteren Polymermaterialien.

2. Verfahren nach Anspruch 1; wobei der Schritt des Bereitstellens eines mehrschichtigen Zwischenpolymerfilms einen kontinuierlichen Filmproduktionsprozess verwendet.

3. Verfahren nach einem der vorhergehenden Ansprüche, wobei der Schritt des Bereitstellens eines mehrschichtigen Zwischenpolymerfilms einen Filmgießprozess verwendet.

4. Verfahren nach einem der Ansprüche 1 bis 2, wobei der Schritt des Bereitstellens eines mehrschichtigen Zwischenpolymerfilms einen Polymerextrusionsprozess verwendet.

5. Verfahren nach Anspruch 4, wobei der Schritt des Bereitstellens eines mehrschichtigen Zwischenpolymerfilms einen Filmblasprozess verwendet.

6. Verfahren nach einem der Ansprüche 4 bis 5, wobei eine oder mehrere Zwischenschichten eine erste und zumindest eine zweite und optional weitere Zwischenschichten umfassen, die erste Zwischenschicht aus dem ersten weiteren Polymermaterial bereitgestellt ist, und wobei die zweite und optional weitere Zwischenschicht aus Polymermaterial frei von vogel- und/oder nagetierabweisenden Komponenten bereitgestellt sind.

7. Verfahren nach Anspruch 6, wobei die erste Zwischenschicht die Zwischenschicht ist, welche die Innenseite der ersten Außenschicht kontaktiert.

8. Verfahren nach Anspruch 7, wobei die Zwischenschicht, welche die Innenseite der ersten Außenschicht kontaktiert, 15 bis 50 % der Dicke des Polymerfilms bereitstellt, bevorzugter 18 bis 40 % der Dicke des Polymerfilms.

9. Verfahren nach einem der Ansprüche 7 bis 8, wobei die erste Außenschicht 5 bis 15 % der Dicke des Polymerfilms bereitstellt.

10. Verfahren nach einem der Ansprüche 4 bis 9, wobei jede von der ersten Außenschicht, der zweiten Außenschicht und jede von den Zwischenschichten durch einen dedizierten Polymerextruder bereitgestellt sind.

11. Verfahren nach einem der Ansprüche 1 bis 10, wobei die Menge an vogel- und/oder nagetierabweisender Komponente in der ersten Außenschicht von 1 bis 10 %w reicht.

12. Verfahren nach einem der Ansprüche 1 bis 11, wobei das erhaltene Polymerfilmabfallmaterial in der Spanne von 2 %w bis 15 %w des Zwischenpolymerfilms ist.

13. Vogel- und/oder nagetierabweisender Polymerfilm (100), umfassend eine Vielzahl von Polymerschichten (1111, 1112, 1113, 1114, 1115), wobei zumindest eine vogel- und/oder nagetierabweisende Komponente an einer Außenoberfläche vorhanden ist, wobei die andere Außenoberfläche frei von vogel- und/oder nagetierabweisender Komponente ist, wobei der vogel- und/oder nagetierabweisende Polymerfilm eine erste Außenpolymerschicht (1111) aus einem ersten Polymermaterial, umfassend zumindest eine vogel- und/oder nagetierabweisende Komponente, eine zweite Außenschicht (1115) aus einem zweiten Polymermaterial und frei von vogel- und/oder nagetierabweisenden Komponenten und eine oder mehrere Zwischenschichten aus zumindest einem ersten weiteren Polymermaterial umfasst, wobei zumindest eine dieser Zwischenschichten (1112) die zumindest eine vogel- und/oder nagetierabweisende Komponente umfasst, wobei das %w der vogel- und/oder nagetierabweisenden Komponente in der ersten Außenschicht höher als das %w der vogel- und/oder nagetierabweisenden Komponente in dieser zumindest einen Zwischenschicht ist.

14. Vogel- und/oder nagetierabweisender Polymerfilm nach Anspruch 13, wobei die Menge an vogel- und/oder nagetierabweisenden Komponente in der ersten Außenschicht von 1 bis 10 %w reicht.

15. Verwendung des vogel- und/oder nagetierabweisenden Polymerfilms nach einem der Ansprüche 13 bis 14 oder eines vogel- und/oder nagetierabweisenden Polymerfilms erhalten durch ein Verfahren nach einem der Ansprüche 1 bis 12, zum Umhüllen oder Bedecken von Tierfutter.

16. Verwendung des vogel- und/oder nagetierabweisenden Polymerfilms nach Anspruch 15, wobei das Umhüllen nach Dehnen des Films auf einen Grad von mehr als 70 % durchgeführt wird.

## Revendications

1. Procédé pour fournir un film polymère répulsif pour oiseaux et/ou rongeurs (100), comprenant les étapes de
- fourniture d'un film polymère intermédiaire multicouche (1001), comprenant
∘ une première couche polymère externe (1111) à partir d'un premier matériau polymère comprenant au moins un composant répulsif pour oiseaux et/ou rongeurs ;
∘ une seconde couche externe (1115) à partir d'un second matériau polymère et étant exempte de composants répulsifs pour oiseaux et/ou rongeurs ;
∘ une ou plusieurs couches intermédiaires (1112, 1113, 1114) à partir d'au moins un premier matériau polymère supplémentaire ;
- la conversion du film polymère intermédiaire en un ou plusieurs films polymères finaux, fournissant ainsi un matériau résiduel de film polymère ;
- la réutilisation du matériau résiduel de film polymère (1020) en tant qu'additif à un ou plusieurs des au moins un matériau polymère supplémentaire.

2. Procédé selon la revendication 1, dans lequel l'étape de fourniture d'un film polymère intermédiaire multicouche utilise un procédé de production de film continu.

3. Procédé selon l'une quelconque des revendications précédentes, dans lequel l'étape de fourniture d'un film polymère intermédiaire multicouche utilise un procédé de coulage de film.

4. Procédé selon l'une quelconque des revendications 1 à 2, dans lequel l'étape de fourniture d'un film polymère intermédiaire multicouche utilise un procédé d'extrusion de polymère.

5. Procédé selon la revendication 4, dans lequel l'étape de fourniture d'un film polymère intermédiaire multicouche utilise un procédé de soufflage de film.

6. Procédé selon l'une quelconque des revendications 4 à 5, dans lequel une ou plusieurs couches intermédiaires comprennent une première et au moins une seconde couches intermédiaires et éventuellement des couches intermédiaires supplémentaires, la première couche intermédiaire est fournie à partir dudit premier matériau polymère supplémentaire, et dans lequel ladite seconde couche intermédiaire et éventuellement des couches intermédiaires supplémentaires sont fournies à partir d'un matériau polymère exempt de composants répulsifs pour oiseaux et/ou rongeurs.

7. Procédé selon la revendication 6, dans lequel ladite première couche intermédiaire est la couche intermédiaire en contact avec le côté externe de la première couche externe.

8. Procédé selon la revendication 7, dans lequel la couche intermédiaire en contact avec le côté interne de la première couche externe fournit 15 à 50 % de l'épaisseur du film polymère, idéalement 18 à 40 % de l'épaisseur du film polymère.

9. Procédé selon l'une quelconque des revendications 7 à 8, dans lequel la première couche externe fournit 5 à 15 % de l'épaisseur du film polymère.

10. Procédé selon l'une quelconque des revendications 4 à 9, dans lequel chacune de la première couche externe, de la seconde couche externe et de chacune des couches intermédiaires est fournie par une extrudeuse de polymère dédiée.

11. Procédé selon l'une quelconque des revendications 1 à 10, dans lequel la quantité de composant répulsif pour oiseaux et/ou rongeurs dans la première couche externe se situe dans une plage de 1 à 10 % en poids.

12. Procédé selon l'une quelconque des revendications 1 à 11, dans lequel le matériau résiduel de film polymère obtenu se situe dans une plage de 2 % en poids à 15 % en poids du film polymère intermédiaire.

13. Film polymère répulsif pour oiseaux et/ou rongeurs (100) comprenant une pluralité de couches polymères (1111, 1112, 1113, 1114, 1115), au moins un composant répulsif pour oiseaux et/ou rongeurs étant présent au niveau d'une surface externe, l'autre surface externe étant exempte de composant répulsif pour oiseaux et/ou rongeurs, ledit film polymère répulsif pour oiseaux et/ou rongeurs comprenant une première couche polymère externe (1111) à partir d'un premier matériau polymère comprenant au moins un composant répulsif pour oiseaux et/ou rongeurs, une seconde couche externe (1115) à partir d'un second matériau polymère et étant exempte de composants répulsifs pour oiseaux et/ou rongeurs et une ou plusieurs couches intermédiaires à partir d'au moins un premier matériau polymère supplémentaire, au moins une de ces couches intermédiaires (1112) comprenant ledit au moins un composant répulsif pour oiseaux et/ou rongeurs, le % en poids du composant répulsif pour oiseaux et/ou rongeurs dans la première couche externe étant supérieur au % en poids du composant répulsif pour oiseaux et/ou rongeurs dans cette au moins une couche intermédiaire.

14. Film polymère répulsif pour oiseaux et/ou rongeurs selon la revendication 13, dans lequel la quantité de composant répulsif pour oiseaux et/ou rongeurs dans la première couche externe se situe dans une plage de 1 à 10 % en poids.

15. Utilisation du film polymère répulsif pour oiseaux et/ou rongeurs selon l'une quelconque des revendications 13 à 14 ou d'un film polymère répulsif pour les oiseaux et/ou les rongeurs obtenu par un procédé selon l'une quelconque des revendications 1 à 12, pour emballer ou recouvrir des aliments pour animaux.

16. Utilisation du film polymère répulsif pour oiseaux et/ou rongeurs selon la revendication 15, dans laquelle l'emballage est réalisé après avoir étiré le film à un degré supérieur à 70 %.
